(19) Europäisches Patentamt
European Patent Office
Office européen des brevets

(11) **EP 3 388 142 A1**

(12) # EUROPEAN PATENT APPLICATION


(43) Date of publication:
**17.10.2018 Bulletin 2018/42**

(51) Int Cl.:
***B01D 63/02*** *(2006.01)*

(21) Application number: **18166473.1**

(22) Date of filing: **10.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.04.2017 JP 2017078516**



(71) Applicant: **Asahi Kasei Kabushiki Kaisha**
**Chiyoda-ku**
**Tokyo 101-8101 (JP)**

(72) Inventors:
- **Sato, Yuta**
  **Tokyo, 101-8101 (JP)**
- **Oyamada, Hiroshi**
  **Tokyo, 101-8101 (JP)**
- **Ban, Yukihiro**
  **Tokyo, 101-8101 (JP)**

(74) Representative: **Strehl Schübel-Hopf & Partner**
**Maximilianstrasse 54**
**80538 München (DE)**


(54) **SEPARATION MEMBRANE MODULE WITH SPECIFIC HOUSING MATERIAL**


(57) To provide a separation membrane module having a housing case that exhibits low elution of butadiene as well as excellent appearance, impact resistance, and heat resistance. A separation membrane module 10 includes a porous membrane 11, a housing case 13 and a sealing material 12. At least a part of the housing case 13 is made of a resin composition that comprises (A) a polyphenylene ether, (B) a polystyrene homopolymer, and (C) a hydrogenated block copolymer. The component (C) is obtained by hydrogenating a block copolymer of a styrene polymer block and a conjugated diene compound polymer block. The component (C) has a weight average molecular weight in the range of 100,000 to 400,000. The resin composition comprises 5 to 50 parts by mass of the component (A), 20 to 90 parts by mass of the component (B), and 3 to 30 parts by mass of the component (C) per 100 parts by mass of the total amount of the components (A), (B) and (C). The resin composition comprises butadiene in a concentration of less than 0.1 mg/kg.


*FIG. 1*

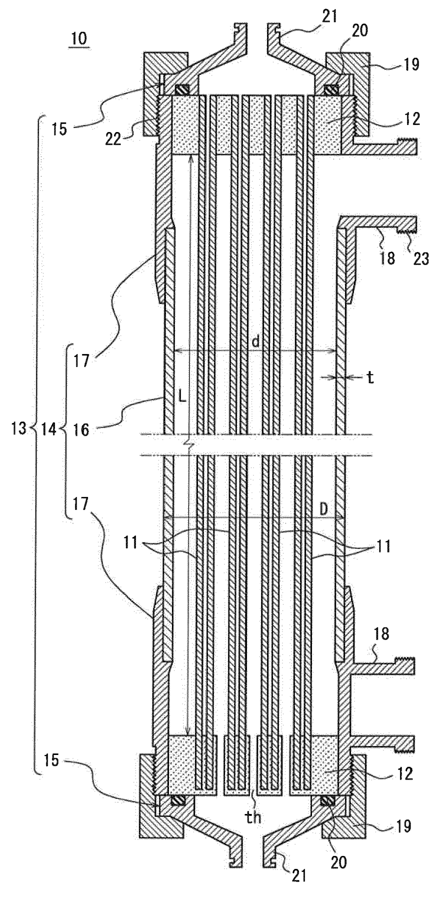


EP 3 388 142 A1

## Description

### TECHNICAL FIELD

The present disclosure relates to separation membrane modules.

### BACKGROUND

Separation membrane modules that include separation membranes housed in a housing case (casing) have been widely used for gas/liquid absorption, degassing, filtration and other purposes in fields including tap water and sewage treatment, pharmaceutical manufacturing, semiconductor manufacturing, and food industry. These applications increased demand for separation membrane modules having a housing case that shows low water absorbance and high heat resistance, as well as excellent dimensional stability, impact resistance, acid resistance and alkali resistance. This has led to studies to use polyphenylene ether resin compositions for manufacturing housing cases.

Polyphenylene ether resin compositions have good moldability, high heat resistance and excellent electrical properties, dimensional stability, impact resistance, acid resistance, alkali resistance, etc., as well as low water absorbency and low specific gravity. Thus, polyphenylene ether resin compositions are utilized in a wide variety of applications including electric electronic parts, office equipment parts, automobile parts, building materials, parts that come in contact with drinking water or beverage liquids, and other various exterior materials and industrial products, and are believed to be also suitable for application to housing cases of separation membrane modules.

Housing cases such as those described above are manufactured such that they meet various standards. Recently, for example, the German drinking water standard KTW for parts that come in contact with drinking water has been revised, requiring that resin compositions be butadiene-free as one of its regulations. To meet such materials requirements, resin compositions are required in the art that are free from rubber-reinforced polystyrene or other like materials, which have heretofore been used in polyphenylene ether resin compositions as materials that may give rise to butadiene. As polyphenylene ether resin compositions that do not contain rubber-reinforced polystyrene or other like materials show reduced impact resistance, housing cases manufactured using such polyphenylene ether resin compositions are prone to breakage at thin portions such as screw threads.

PTL 1 and PTL 2 suggest using polyphenylene ether resin compositions containing polyphenylene ether resin and polystyrene resin for the formation of piping that comes in contact with drinking water. The resin compositions of PTL 1 and PTL 2 mainly comprise rubber-reinforced polystyrene and are believed to be usable in piping applications that require more heat resistance than conventional PVC piping.

PTL 3 discloses fluid engineering articles manufactured using butadiene-free polyphenylene ether resin compositions.

### CITATION LIST

#### Patent Literature

PTL 1: JP2003074754A

PTL 2: JP2008291183A

PTL 3: JP2015500901A


### SUMMARY

However, both PTL 1 and PTL 2 only exemplify resin compositions that comprise rubber-reinforced polystyrene to ensure impact resistance. To make the resin compositions butadiene-free, it is necessary to improve impact resistance without adding rubber-reinforced polystyrene. Moreover, housing cases of separation membrane modules manufactured using such resin compositions had the drawback of tending to show poor appearance due to periodic thickness unevenness (in the case of tubular housing cases, the tube inner surface tends to have poor appearance).

The resin composition described in PTL 3 comprises no polymer other than polyphenylene ether, polystyrene and optional polyethylene and also comprises glass fiber. However, housing cases manufactured using such a resin composition show reduced surface smoothness, resulting in problems of scratching or cutting of housed separation membranes, poor appearance, and so forth.

The present disclosure has been made in consideration of the foregoing circumstance. A problem to be solved by the present disclosure is to provide a separation membrane module having a housing case that exhibits low elution of butadiene as well as excellent appearance, impact resistance and heat resistance.

The inventors conducted extensive studies to solve the aforementioned problem and established that the problem can be solved with a housing case made of a resin composition that comprises a polyphenylene ether, a polystyrene homopolymer, and a hydrogenated block copolymer.

Specifically, the present disclosure is as follows:

[1] A separation membrane module comprising:

a porous membrane;
a housing case for housing the porous membrane; and
a sealing material for fixing at least a part of the porous membrane to the housing case,
wherein at least a part of the housing case is made of a resin composition that comprises (A) a polyphenylene ether, (B) a polystyrene homopolymer, and (C) a hydrogenated block copolymer having a weight average molecular weight in the range of 100,000 to 400,000, the hydrogenated block copolymer obtained by hydrogenating a block copolymer of a styrene polymer block and a conjugated diene compound polymer block,
the resin composition comprises
5 to 50 parts by mass of the component (A),
20 to 90 parts by mass of the component (B), and
3 to 30 parts by mass of the component (C) per 100 parts by mass of the total amount of the components (A), (B) and (C), and
the resin composition comprise butadiene in a concentration of less than 0.1 mg/kg.

[2] The separation membrane module according to [1], wherein the resin composition further comprises (D) a phosphorus antioxidant in an amount of 0.05 to 1 part by mass per 100 parts by mass of the total amount of the components (A), (B) and (C).
[3] The separation membrane module according to [1] or [2], wherein the component (A) has a weight average molecular weight in the range of 40,000 to 100,000.
[4] The separation membrane module according to any one of [1] to [3], wherein the component (C) has a degree of hydrogenation of 95% or more.
[5] The separation membrane module according to any one of [1] to [4], wherein the housing case comprises at least a cylindrical tubular part, and at least a part of the tubular part is made of the resin composition.
[6] The separation membrane module according to [5], wherein the tubular part is a tube member.
[7] The separation membrane module according to [5] or [6], wherein the tubular part has an outer diameter D (mm) of 40 mm or more and a wall thickness t (mm) that satisfies the condition $(1/40) \times D < t < (1/10) \times D$.
[8] The separation membrane module according to any one of [5] to [7], wherein a value obtained by dividing an inner wall area of the tubular part by an inner volume of the tubular part is 0.12 $m^{-1}$ or less.
[9] The separation membrane module according to any one of [1] to [4], wherein the housing case comprises at least a header member having a nozzle part, and at least a part of the header member is made of the resin composition.
[10] The separation membrane module according to any one of [1] to [4], wherein the housing case comprises at least a cap member, and at least a part of the cap member is made of the resin composition.
[11] The separation membrane module according to any one of [1] to [10], wherein the housing case comprises at least a screw thread, and the screw thread has a pitch of 1 mm or more.
[12] The separation membrane module according to any one of [1] to [11], wherein the porous membrane has a hollow fiber shape.
[13] The separation membrane module according to any one of [1] to [12], wherein the separation membrane module is used in a tap water treatment or food application.

The resent disclosure provides a separation membrane module having a housing case that exhibits low elution of butadiene as well as excellent appearance, impact resistance, and heat resistance.

BRIEF DESCRIPTION OF THE DRAWINGS

In the accompanying drawing:

FIG. 1 is a longitudinal end view illustrating a separation membrane module according to an embodiment of the present disclosure;

FIG. 2 is a longitudinal end view illustrating a first modification of the separation membrane module of FIG. 1; and
FIG. 3 is a longitudinal end view illustrating a second modification of the separation membrane module of FIG. 1.

DETAILED DESCRIPTION

The following provides a detailed description of an embodiment for implementing what is disclosed in the present disclosure (hereinafter simply "present embodiment"). The present embodiment is for illustration purposes only and shall not be construed restrictive in any way. Various modifications and alterations of the present disclosure will become apparent to those skilled in the art without departing from the spirit and scope of the present disclosure.

A separation membrane module 10 according to the present embodiment illustrated in FIG. 1 is used in a tap water treatment or food application, for example. The separation membrane module 10 of the present embodiment includes a porous membrane 11, a sealing material 12, and a housing case 13.

The porous membrane 11 is porous and filters fluids passing therethrough. In the present embodiment, the porous membrane 11 is, for example, a hollow fiber membrane having a hollow fiber shape or a flat membrane. More specifically, in the present embodiment, the porous membrane 11 is a hollow fiber membrane housed in the housing case 13 in the form of a hollow fiber membrane bundle in which a plurality of hollow fiber membranes is bundled together. In FIG. 1, hollow fiber membranes are illustrated having large diameters and being spaced apart from one another for easy visual recognition. Instead, hollow fiber membranes having diameters smaller than the scale of FIG. 1 may be housed in the housing case 13 more densely than the scale of FIG. 1.

The porous membrane 11 can be made of any material such as, for example, polyvinylidene fluoride, polyethylene, polypropylene, ethylene-vinyl alcohol copolymer, polyamide, polyetherimide, polystyrene, polyvinyl alcohol, polyphenylene ether, polyphenylene sulfide, polysulfone, polyethersulfone, acrylonitrile, and cellulose acetate, which have been used in the art. Suitable are crystalline thermoplastic resins such as polyethylene, polypropylene, ethylene-vinyl alcohol copolymer, polyvinyl alcohol and polyvinylidene fluoride from the perspective of imparting strength. More suitable are polyolefins, polyvinylidene fluoride and the like which are hydrophobic and therefore have high water resistance and are expected to have durability for filtration of normal aqueous liquids. Most suitable is polyvinylidene fluoride which has excellent chemical durability such as chemical resistance. Examples of polyvinylidene fluoride include vinylidene fluoride homopolymers and vinylidene fluoride copolymers that comprise 50 mol% or more of vinylidene fluoride. Examples of vinylidene fluoride copolymers include copolymers of vinylidene fluoride and one or more monomers selected from tetrafluoroethylene, hexafluoropropylene, trifluorochloroethylene and ethylene. Vinylidene fluoride homopolymers are most preferred as the polyvinylidene fluoride.

The sealing material 12 fixes at least a part of the porous membrane 11 to the housing case 13. In the present embodiment, the sealing material 12 fixes opposing ends of the porous membrane 11, a hollow fiber membrane, to a housing body 14 (later described) of the housing case 13. In the present embodiment, the sealing material 12 is formed by loading a potting material between the outer peripheral surface of the porous membrane 11 and the inner peripheral surface of the housing body 14 and curing the potting material.

The sealing material 12 can be made of any material. For example, two-component mixing type curable resins are applicable, with urethane resins, epoxy resins, silicone resins and the like being suitably used in the art. Desirably, the material of the sealing material 12 is properly selected in consideration of viscosity, pot life, hardness and mechanical strength of the cured product, physical and chemical stability to liquids to be treated, adhesion to the porous membrane 11, and adhesion to the housing case 13. For example, from the perspective of shortening the production time and improving productivity, it is preferred to use urethane resins, which have short pot life. In applications where mechanical strength is required, it is preferred to use epoxy resins, which have mechanical durability. The sealing material 12 may be made of two or more of these resins.

The housing case 13 houses therein the porous membrane 11. At least a part of the housing case 13 is made of a resin composition described later. In the present embodiment, the housing case 13 includes the housing body 14 and two cap members 15.

In the present embodiment, the housing body 14 is a cylindrical body which is cylindrical as a whole and houses the porous membrane 11 in the interior of the cylindrical body. In the present embodiment, the porous membrane 11, a hollow fiber membrane, is housed such that the length of the hollow fiber membrane runs along the axial direction of the housing body 14. The housing body 14 has a tubular part 16 and two membrane fixing parts 17. In the present embodiment, the tubular part 16 and the two membrane fixing parts 17 are formed of a tube member and two header members, respectively, which are separate members. However, as illustrated in FIG. 2, the housing body 14 may be a single member that is not dividable. From the perspective of ensuring the burst strength of the housing body 14, it is preferred that the housing body 14 is a single member. On the other hand, from the perspective of reducing the size of one member for easy molding, separate members obtained by further dividing a tube member or header members may be joined and combined together to form the tubular part 16 or membrane fixing parts 17.

In FIG. 1, the tubular part 16 is cylindrical. In the present embodiment, the tubular part 16 is made of a resin

composition described below as a part of the housing case 13. The membrane fixing parts 17 are engaged with opposing axial ends of the tubular part 16. In the present embodiment, an integrated housing body 14 is formed by bonding together the tubular part 16 and membrane fixing parts 17.

In the present embodiment, it is preferred that the tubular part 16 has an outer diameter D (mm) of 40 mm or more and a wall thickness t (mm) that satisfies the condition $(1/40) \times D < t < (1/10) \times D$.

When the tubular part 16 has a small bore diameter, the influence of the wall thickness is small. However, when the tubular part 16 has a large bore diameter (40 mm or more), the relationship between the outer diameter D and wall thickness t of the tubular part 16 greatly influences pressure resistance, heat resistance, creep characteristics, and high-temperature creep characteristics. Further, in order to impart superior heat resistance over existing tubular parts made of resin such as vinyl chloride resin, polyethylene or polypropylene, it is preferred that the tubular part 16 having a large bore diameter has a wall thickness t that is suited to enable the tubular part 16 to withstand for prolonged period of time in a state where it is loaded with internal pressure at temperatures as high as 90°C or above. In order to ensure burst strength sufficient to allow the tubular part 16 to be used without any trouble, the wall thickness t is preferably larger than $(1/40) \times D$. In order to reduce the amount of the used resin composition to prevent the tubular part 16 from becoming too heavy, the wall thickness t is preferably smaller than $(1/10) \times D$.

In the present embodiment, it is preferred that the value obtained by dividing the inner wall area of the tubular part 16 by the inner volume of the tubular part 16 is 0.12 $m^{-1}$ or less. In the present embodiment, the "inner wall area" of the tubular part 16 refers to an area of an inner peripheral surface, including the membrane fixing parts 17, of the housing body 14 between the exposed surfaces of the sealing materials 12 disposed at opposing axial ends of the housing body 14. In the present embodiment, the inner diameter of the membrane fixing part 17 is deemed the same as the inner diameter of the tubular part 16. Thus, the value of $d \times \pi \times L$ (where d is the inner diameter of the tubular part 16 and L is the distance between the interfaces of the sealing materials 12) is regarded as the inner wall area of the tubular part 16. In the present embodiment, the "internal volume" of the tubular part 16 refers to an internal volume of the housing body 14 including the membrane fixing parts 17 between the sealing materials 12 disposed at opposing axial ends of the housing body 14. In the present embodiment, the value of $(d/2)^2 \times \pi \times L$ is regarded as the internal volume of the tubular part 16. Thus, the value obtained by dividing the inner wall area by the inner volume is 4/d.

In order to reduce the amount of butadiene to be transferred to flowing fluids, it is preferred to reduce the contact area between the fluid passing through the tubular part 16 and the inside of the tubular part 16 that mainly comes in contact with the fluid. In order to reduce the contact area between the volume of fluid passing through the tubular part 16 and the tubular part 16, the value obtained by dividing the inner wall area of the tubular part 16 by the inner volume of the tubular part 16 is preferably 0.12 $m^{-1}$ or less, more preferably 0.06 $m^{-1}$ or less, and even more preferably 0.03 $m^{-1}$ or less.

In the present embodiment, the membrane fixing part 17 has a cylindrical part. The membrane fixing part 17 is made of a resin composition described later as a part of the housing case 13. The membrane fixing part 17 is engaged with the tubular part 16 such that the inside of the cylindrical part of the membrane fixing part 17 is in communication with the inside of the tubular part 16 and that their axes are coincident with each other.

In the present embodiment, the membrane fixing part 17 has nozzle parts 18. A side surface of the cylindrical part of the membrane fixing part 17 is provided with nozzle parts 18 protruding in a direction perpendicular to the axial direction of the cylindrical part of the membrane fixing part 17. The nozzle part 18 is provided closer to the tubular part 16 than the sealing material 12 in the axial direction of the membrane fixing part 17. The nozzle part 18 functions as a port for allowing fluids to pass between the inside and outside of the membrane fixing part 17. Thus, the nozzle portion 18 may allow fluids to flow into or out of an internal space defined by the inner peripheral surface of the housing body 14, the outer peripheral surface of each hollow fiber membrane, and the exposed surfaces of the sealing material 12.

In the present embodiment, screw threads 22 are formed on the outer peripheral surface of the housing body 14 at opposing axial ends thereof. More specifically, male threads are formed as the screw threads 22 on the membrane fixing parts 17 of the housing body 14. A nut 19 for fixing the cap member 15 is fixed by the screw thread 22. For coupling with other devices, the nozzle part 18 may also have a thread 23 formed thereon. When the pitch of the screw threads 22, 23 is reduced, the threads 22, 23 become thin and easily break due to impact or falling. To avoid this, the pitch of the screw threads 22, 23 is preferably 1 mm or more, and more preferably 2 mm or more.

In the present embodiment, the cap member 15 has a cylindrical or tapered shape with one end opened. More specifically, in the present embodiment, the cap member 15 has a tapered shape. The open ends of the cap members 15 are engaged with the housing body 14 at opposing axial ends of the housing body 14. In the present embodiment, the cap member 15 is fixed to the housing body 14 by means of the nut 19. An O-ring 20 is provided between the cap member 15 and at least one of the sealing material 12 and the housing body 14, so that an internal space defined by the cap member 15 and the housing body 14 is liquid-tightly sealed.

A conduit 21 is provided on the closed end or on the small diameter side of the tapered portion of the cap member 15. The conduit 21 protrudes in parallel to the axial direction of the housing body 14. The conduit 21 functions as a port for allowing fluids to pass between the inside and outside of the cap member 15. Thus, the conduit 21 may

allow fluids to flow into or out of an internal space defined by the cap member 15 and sealing material 12. An opening of the porous membrane 11, a hollow fiber membrane, is exposed to the internal space defined by the cap member 15 and sealing material 12. The cap members 15 provided on the opposing axial ends of the housing body 14 may have the same or different shape or may be made of the same or different material.

In the present embodiment, an opening of one lengthwise end of the porous membrane 11 is exposed to the space defined by the sealing material 12 and the cap member 15 with the other end being embedded within the sealing material 12. A through hole th along the axial direction is formed in the sealing material 12 on the side where the porous membrane 11 is embedded. The nozzle part 18 on the side where the porous membrane 11 is embedded is closed.

In the separation membrane module 10 having such a configuration, for example, a liquid to be treated, allowed to flow into the separation membrane module 10 through the conduit 21 provided on the side where the porous membrane 11 is embedded (lower side in the drawing), flows through the through hole th into the internal space defined by the inner peripheral surface of the housing body 14, the outer peripheral surface of the porous membrane 11 and the exposed surfaces of the sealing material 12. The liquid to be treated flowed into the internal space passes through the hollow space of the housing body 14 toward the opened nozzle 18 (upper side in the drawing) with some of the liquid being filtered through the porous membrane 11. The filtered liquid passes through the hollow space of the porous membrane 11 to be discharged from the conduit 21 on the side where the opening of the porous membrane 11 is exposed (upper side in the drawing). The liquid to be treated that passed through the hollow space of the housing body 14 to the opened nozzle 18 is discharged as concentrated liquid.

Alternatively, as illustrated in FIG. 3, the separation membrane module 10 may have a configuration wherein openings of opposing lengthwise ends of the porous membrane 11 are exposed to the internal space defined by the sealing material 12 and the capping member 15, no through-hole is formed in the sealing materials 12, and the nozzle parts 18 are both opened.

In the separation membrane module 10 having such a configuration, for example, a liquid to be treated, allowed to flow into the separation membrane module 10 through one of the conduits 21, flows through the hollow space of the porous membrane 11 toward the other conduit 21 with some of the liquid being filtered through the porous membrane 11. The filtered liquid flows into the inner space defined by the inner peripheral surface of the housing body 14, the outer peripheral surface of the hollow fiber membrane and the exposed surfaces of the sealing materials 12. The filtered liquid flowed into the internal space is discharged from the nozzle part 18. The liquid to be treated that passed through the hollow space of the hollow fiber membrane to the other conduit 21 is discharged as concentrated liquid from the other conduit 21. Alternatively, the separation membrane module 10 may be configured such that the liquid to be treated is allowed to flow into one of the two nozzle parts 18 whereby the filtered liquid is discharged from the conduits 21 and the concentrated liquid is discharged from the other nozzle part 18.

The following describes a resin composition, a material constituting at least a part of the housing case 13 in the present embodiment.

In the present embodiment, the resin composition comprises (A) a polyphenylene ether, (B) a polystyrene homopolymer, and (C) a hydrogenated block copolymer having a weight average molecular weight in the range of 100,000 to 400,000, the hydrogenated block copolymer obtained by hydrogenating a block copolymer of a styrene polymer block and a conjugated diene compound polymer block. The resin composition of the present embodiment comprises 5 to 50 parts by mass of the component (A), 20 to 90 parts by mass of the component (B) and 3 to 30 parts by mass of the component (C) per 100 parts by mass of the total amount of the components (A), (B) and (C), wherein butadiene is included in a concentration of less than 0.1 mg/kg. It is also preferred that the resin composition further comprises (D) a phosphorus antioxidant in an amount of 0.05 to 1 part by mass per 100 parts by mass of the total amount of the components (A), (B) and (C).

First, the components used in the resin composition will be described.

-(A) Polyphenylene Ether-

(A) Polyphenylene ether (also referred to as "component (A)" and polyphenylene ether may be abbreviated as "PPE" herein) used in the present embodiment is a homopolymer or copolymer having a repeat unit represented by the following formula (I) and/or formula (II) (unit structure derived from phenylene ether):

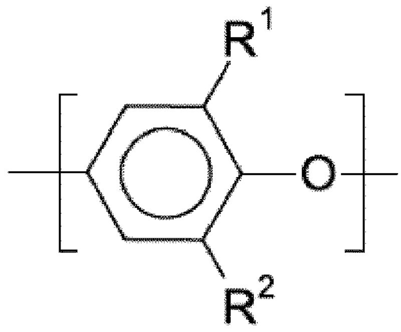

(I)

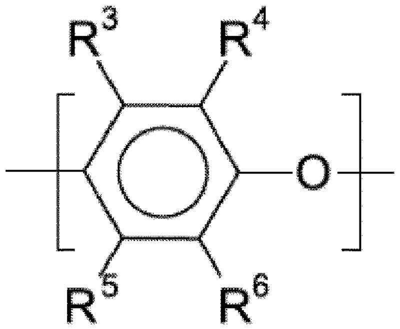

(II)

where $R^1$, $R^2$, $R^3$, $R^4$, $R^5$ and $R^6$ are each independently hydrogen, C1-C4 alkyl, C6-C9 aryl or halogen with the proviso that $R^5$ and $R^6$ are not hydrogen at the same time, and $R^1$ to $R^6$ may be substituted or unsubstituted.

Representative examples of polyphenylene ether homopolymers include poly(2,6-dimethyl-1,4-phenylene) ether, poly(2-methyl-6-ethyl-1,4-phenylene) ether, poly(2,6-diethyl-1,4-phenylene) ether, poly(2-ethyl-6-n-propyl-1,4-phenylene) ether, poly (2,6-di-n-propyl-1,4-phenylene) ether, poly(2-methyl-6-n-butyl-1,4-phenylene) ether, poly(2-ethyl-6-isopropyl-1,4-phenylene) ether, poly(2-methyl-6-chloroethyl-1,4-phenylene) ether, poly (2-methyl-6-hydroxyethyl-1,4-phenylene) ether, and poly(2-methyl-6-chloroethyl-1,4-phenylene) ether, with poly(2,6-dimethyl-1,4-phenylene) ether being preferred.

Polyphenylene ether copolymers are copolymers having a repeat unit structure represented by formula (I) and/or formula (II) as a main repeat unit structure. The term "main repeat unit structure" as used herein refers to a repeat unit structure included in the copolymer in an amount of 50 mol% or more, preferably 70 mol% or more, and more preferably 90 mol% or more.

Representative examples of polyphenylene ether copolymers include copolymers of 2,6-dimethylphenol and 2,3,6-trimethylphenol, copolymers of 2,6-dimethylphenol and o-cresol, and copolymers of 2,6-dimethylphenol, 2,3,6-trimethylphenol and o-cresol.

Also preferred are polyphenylene ether copolymers that include, for example, 2-(dialkylaminomethyl)-6-methylphenylene ether monomer unit or 2-(N-alkyl-N-phenylaminomethyl)-6-methylphenylene ether monomer unit as a main repeat unit structure. Polyphenylene ether copolymers described for example in JPS63301222A can be used.

In the present embodiment, as the component (A), the resin composition may comprise a modified polyphenylene ether in which a part or whole of the polyphenylene ether is modified with an unsaturated carboxylic acid or a derivative thereof, for example. Any modified polyphenylene ether can be used and those known in the art can also be used so long as the effect of the present embodiment is not compromised. For example, modified polyphenylene ethers described for example in JPH02276823A, JPS63108059A and JPS59059724A can be used.

Modified polyphenylene ethers can be produced by any method and methods known in the art can be used. For example, modified polyphenylene ethers can be produced by reacting polyphenylene ethers with unsaturated carboxylic acids or derivatives thereof by melt-kneading in the presence or absence of a radical initiator. Alternatively, modified polyphenylene ethers can be produced by reacting polyphenylene ethers with unsaturated carboxylic acids or derivatives thereof in solution by dissolving the polyphenylene ethers and unsaturated carboxylic acids or derivatives thereof in organic solvent in the presence or absence of a radical initiator.

Examples of unsaturated carboxylic acids or derivatives thereof include dicarboxylic acids such as maleic acid, fumaric acid, itaconic acid, halogenated maleic acid, cis-4-cyclohexene 1,2-dicarboxylic acid and endo-cis-bicyclo (2,2,1)-5-heptene-2,3-dicarboxylic acid, and acid anhydrides, esters, amides, imides etc. of these dicarboxylic acids; and monocarboxylic acids such as acrylic acid and methacrylic acid, and esters, amides etc. of these monocarboxylic acids. For saturated carboxylic acids, it is also possible to use compounds that themselves may be thermally decomposed into

derivatives used in the present embodiment at the reaction temperature for the production of modified polyphenylene ethers. Specific examples of such compounds include malic acid and citric acid. These compounds may be used alone or in combination.

(A) Polyphenylene ether is preferably in powder form. "Powder" herein refers to one having an average particle diameter in the range of 1 to 2,000 μm, preferably in the range of 1 to 1,000 μm, more preferably in the range of 10 to 700 μm, and even more preferably in the range of 100 to 500 μm. From the perspective of manageability during processing, the average particle diameter is preferably 1 μm or more, and is preferably 1,000 μm or less from the perspective of limiting the generation of non-molten material during melt-kneading. "Average particle diameter" herein is measured by particle size measurement by sieving.

The weight average molecular weight of (A) polyphenylene ether is preferably in the range of 40,000 to 100,000, and more preferably in the range of 45,000 to 70,000. From the perspective of improving the appearance of a molded article for piping produced from the resin composition, the weight average molecular weight of (A) polyphenylene ether preferably falls within these ranges.

The information on the molecular weight of the polyphenylene ether of the present embodiment is obtained by measurement using a gel permeation chromatographer. Specific measurement conditions for gel permeation chromatography are as follows: a calibration curve is created using polystyrene standards with molecular weights 3,650,000, 2,170,000, 1,090,000, 681,000, 204,000, 52,000, 30,200, 13,800, 3,360, 1,300 and 550 on gel permeation chromatography System 21 from Showa Denko K.K. (columns: two K-805L columns (Showa Denko KK) in series, column temperature: 40°C, solvent: chloroform, solvent flow rate: 1.0 ml/min, sample concentration: 1 g/L solution of polyphenylene ether in chloroform). The selectable UV wavelength for the detection unit is 254 nm for standard polystyrene and 283 nm for polyphenylene ether.

In the resin composition of the present embodiment, the component (A) content is preferably 5 to 50 parts by mass, and more preferably 15 to 40 parts by mass, per 100 parts by mass of the total amount of the components (A), (B) and (C). If the component (A) content is less than 5 parts by mass, it results in low heat proof temperature and insufficient high temperature creep. If the component (A) content exceeds 50 parts by mass, it results in insufficient impact resistance and/or moldability.

The reduced viscosity of the component (A) as measured with an Ubbelohde viscometer tube at 30°C in 0.5 g/dL chloroform solution is, for example, preferably 0.30 to 0.60 dL/g, and more preferably 0.45 to 0.60 dL/g.

-(B) Polystyrene Homopolymer-

(B) Polystyrene homopolymer (also referred to as "component (B)" herein) used in the present embodiment is a polymer which is obtained by polymerizing a styrene compound and which is not copolymerized with other components such as rubber components. Specific examples of styrene compounds include styrene, α-methylstyrene, 2,4-dimethylstyrene, monochlorostyrene, p-methylstyrene, p-tert-butylstyrene, and ethylstyrene, with styrene being most preferred.

In the resin composition of the present embodiment, the component (B) content is preferably 20 to 90 parts by mass, and more preferably 40 to 75 parts by mass, per 100 parts by mass of the total amount of the components (A), (B) and (C). If the component (B) content is less than 20 parts by mass, it results in failure to obtain sufficient moldability. If the amount of the component (B) exceeds 90 parts by mass, it results in failure to obtain heat resistance.

-(C) Hydrogenated Block Copolymer-

(C) Hydrogenated block copolymer (also referred to as "component (C)" herein) used in the present embodiment is a hydrogenated block copolymer which is obtained by hydrogenating a block copolymer of a styrene polymer block and a conjugated diene compound polymer block and which has a weight average molecular weight in the range of 100,000 to 400,000.

The block copolymer before hydrogenation can have any structure such as, for example, S-B-S, S-B-S-B, $(S-B-)_4-S$ or S-B-S-B-S, where S is a styrene polymer block chain and B is a conjugated diene compound polymer block chain.

The degree of hydrogenation of unsaturated bonds derived from the conjugated diene compound is preferably 95% or more, and more preferably 99% or more. The degree of hydrogenation herein can be determined by a nuclear magnetic resonator (NMR). Free butadiene can be removed by hydrogenating the block copolymer. With the degree of

hydrogenation being 95% or more, it is possible to ensure impact resistance while removing butadiene.

Any microscopic structure can be chosen for the conjugated diene compound polymer block. Typically, the amount of vinyl bonds (proportion of 1,2-vinyl bonds and 3,4-vinyl bonds among the bonds of conjugated dienes incorporated in the form of 1,2-bond, 3,4-bond and 1,4-bond) is preferably 2% to 60%, and more preferably 8% to 40%. The amount of vinyl bonds herein can be determined by a nuclear magnetic resonator (NMR).

The weight average molecular weight of the component (C) is in the range of 100,000 to 400,000, preferably in the range of 150,000 to 350,000, and more preferably in the range of 200,000 to 330,000. If the weight average molecular weight of the component (C) is less than 100,000, it results in failure to obtain sufficient impact resistance as well as to provide sufficient control of the degree of degradation of the component (C). If the weight average molecular weight of the component (C) exceeds 400,000, it results in increased load upon melt extrusion so that it becomes difficult to control the melt-kneading and/or degradation degree of the component (C). The weight average molecular weight herein can be determined as styrene equivalent molecular weight by gel permeation chromatography (GPC).

In the component (C), the weight average molecular weight of at least one styrene polymer block is preferably 15,000 or more, and more preferably in the range from 20,000 to 70,000. More preferably, the weight average molecular weight of all the styrene polymer blocks is 15,000 or more. With the weight average molecular weight of the styrene polymer block of the component (C) being within the above-mentioned ranges, it is possible to obtain sufficient impact resistance and sufficient, easy control of the degree of degradation of the component (C). The weight average molecular weight of the styrene polymer block herein can be measured as styrene equivalent molecular weight by gel permeation chromatography (GPC).

The component (C) can contain any amount of the styrene polymer block, but preferably contains 20% to 50% by mass, and more preferably 20% to 40% by mass of the styrene polymer block from the perspective of more easily imparting impact resistance. The styrene polymer block content in the component (C) can be measured for example by the procedure described below. Specifically, a styrene polymer block (styrene polymers with an average degree of polymerization of about 30 or less are excluded here) is prepared by oxidative decomposition of a copolymer prior to hydrogenation with tert-butyl hydroperoxide using osmium tetroxide as a catalyst (I. M. Kolthoff, et al., J. Polym. Sci. 1, 429 (1946), hereinafter also referred to as "osmium tetroxide decomposition method"). The measured mass of the styrene polymer block is then used to find the styrene polymer block content based on the following equation:

$$\text{Styrene polymer block content (\% by mass)} = (\text{mass of styrene polymer block in the copolymer before hydrogenation} / \text{mass of the copolymer before hydrogenation}) \times 100$$

For the component (C), two or more hydrogenated block copolymers having different compositions and/or structures can also be used in combination. For example, hydrogenated block copolymers having different block contents, e.g., a hydrogenated block copolymer having a styrene polymer block content of 50% or more and a hydrogenated block copolymer having a styrene polymer block content of 30% or less can be used in combination. Alternatively, for example, hydrogenated random block copolymers obtained by hydrogenating block copolymers containing random copolymer blocks of styrene and conjugated diene can be used in combination.

The component (C) can be produced by methods described for example in JPS3619286B, JPS4317979B, JPS482423B, JPS4936957B, JPS5749567B, and JPS5811446B.

In the resin composition of the present embodiment, the component (C) content is preferably 3 to 30 parts by mass, and more preferably 5 to 25 parts by mass, per 100 parts by mass of the total amount of the components (A), (B) and (C). If the component (C) content is less than 3 parts by mass, it results in failure to obtain sufficient impact resistance. If the component (C) content exceeds 30 parts by mass, it results not only in failure to obtain impact resistance, but also in insufficient rigidity such as flexural modulus or flexural strength.

--Method for Producing (C) Hydrogenated Block Copolymer--

(C) Hydrogenated block copolymer can be produced by any method. For example, the following method can be used. First, a block copolymer having a predetermined styrene block content and a predetermined weight average molecular weight is synthesized for example by anion block copolymerization of styrene and butadiene in cyclohexane solution using n-butyllithium as a polymerization catalyst and tetrahydrofuran as a vinyl content regulator. The polymer structure and molecular weight can be controlled by changing the amounts of charged monomers and catalyst amount, respectively. The styrene block content can be measured by ultraviolet (UV) spectrophotometry

and the weight average molecular weight can be measured by gel permeation chromatography.

Subsequently, hydrogenation of the block copolymer produced above is carried out for 2 hours at 50°C under a hydrogen pressure of 5 kg/cm$^2$ using for example bis(cyclopentadienyl)titanium dichloride and n-butyllithium as hydrogenation catalysts, e.g., using the method described in JPS59133203A. This method allows 99% or more of the double bonds of butadiene blocks to be hydrogenated while leaving most of the benzene rings of styrene blocks non-hydrogenated.
The degree of hydrogenation (average degree of hydrogenation of double bonds based on the conjugated diene monomer units in the hydrogenated block copolymer) can be measured by nuclear magnetic resonance (NMR) spectroscopy under the following conditions:

Measurement instrument: JNM-LA 400 (JEOL)
Observation nucleus: $^1$H
Solvent: deuterated chloroform
Measurement sample: products before and after polymer hydrogenation
Sample concentration: 50 mg/mL
Observation frequency: 400 MHz
Chemical shift standard: TMS (tetramethylsilane)
Pulse delay: 2.904 seconds
Number of scans: 64 times
Pulse width: 45°
Measurement temperature: 26°C

-(D) Phosphorus Antioxidant-

In the present embodiment, it is preferred to add (D) a phosphorus antioxidant (also referred to as component (D) herein) in addition to the components (A), (B) and (C). Phosphorus antioxidants are antioxidants containing a compound having phosphorus atom(s) in its molecule.
(D) Phosphorus antioxidant is stabilized by reducing hydroperoxide, which causes degradation at high temperatures, and therefore contributes to improvement in transmittance of light having a relatively short wavelength (e.g., 420 nm to 500 nm wavelength), particularly reductions in light yellow coloring.
Specific examples of the component (D) include alkyl phosphites, alkyl aryl phosphites, and aryl phosphites. Industrially, products sold under the trade names ADK STAB PEP-8, ADK STAB PEP-36, ADK STAB HP-10 and ADK STAB 2112 by ADEKA Corporation, Irgafos 168 by BASF Corporation and so forth are available. Preferred are ADK STAB PEP-36 and Irgafos 168.
In the resin composition of the present embodiment, the component (D) content is preferably 0.05 to 1 part by mass, and more preferably 0.1 to 0.5 parts by mass, per 100 parts by mass of the total amount of the components (A), (B) and (C). If the component (D) content is less than 0.05 parts by mass, there is tendency that sufficient discoloration prevention effect cannot be obtained. If the component (D) content exceeds 1 part by mass, it may cause mold deposit (MD).
Mold deposit (MD) refers to a phenomenon in which during the molding process low-molecular substances are ejected in gaseous form from the molten resin, accumulate on the mold, and stain the mold.

-Other Components-

The resin composition of the present embodiment can optionally comprise other plastic additives (e.g., antioxidants other than (D) phosphorus antioxidant, plasticizers, antistatic agents, lubricants, release agents, dyes, pigments, and various inorganic fillers for plastics) and glass fiber in amounts such that the effect of the present embodiment is not compromised.
Preferred antioxidants other than (D) phosphorus antioxidant are sulfur antioxidants and hindered phenol antioxidants.
As plasticizers, antistatic agents, lubricants, release agents, dyes, pigments and various inorganic fillers for plastics, those commonly used in the art can be used as appropriate.
The resin composition of the present embodiment can further comprise other polymers and/or oligomers such as, for example, petroleum resins for improving flow, terpene resins and hydrogenated resins thereof, coumarone resins, coumarone indene resins, silicone resins, and phenol resins.
The resin composition of the present embodiment can comprise glass fiber, but preferably in an amount of up to 20% by mass of the resin composition (100% by mass) because such an amount can provide good appearance. The

glass fiber content is more preferably 15% by mass or less, even more preferably 10% by mass or less, and most preferably, the resin composition is free from glass fiber.

-Butadiene Concentration in Resin Composition-

The butadiene concentration in the resin composition of the present embodiment is less than 0.1 mg/kg. To reduce the butadiene concentration to less than 0.1 mg/kg, it is preferred that the resin composition of the present embodiment does not comprise rubber-reinforced polystyrene. With the butadiene concentration being less than 0.1 mg/kg, the resin composition can be treated as being butadiene-free, so that it meets drinking water standards such as KTW. The butadiene concentration in the resin composition can be measured by gas chromatography. "Butadiene" refers to butadiene having the formula ($CH_2$=CHCH=$CH_2$) and does not include polymerized butadiene residues.

-Method for Producing Resin Composition-

The resin composition of the present embodiment can be produced by any method, e.g., kneading with a kneading machine such as an extruder, a heating roll, a kneader or a Banbury mixer. Preferred is melt-kneading with an extruder in terms of productivity.

The kneading temperature may follow a preferred processing temperature for the base resin and the target kneading temperature is in the range of 160°C to 360°C, preferably 180°C to 360°C, and more preferably 240°C to 320°C. More specifically, when components (A), (B) and (C) and other components are to be melt-kneaded using a twin-screw extruder, the temperature of the molten resin composition extruded from the die exit of the twin-screw extruder can be in the range of 160°C to 360°C.

When producing the resin composition of the present embodiment using a twin-screw extruder, the component (B) can be fed at the same time as the component (A) and/or component (C) from the same upstream feed port. However, it is preferred that the component (B) is fed from an extruder's barrel located at least 40% downstream of the sequence of barrels (i.e., from the rear stage of the barrel sequence). Feeding the component (B) from the rear stage of the barrel sequence can further limit the decomposition of the component (B) and therefore can prevent reductions in mechanical strength (e.g., tensile strength, flexural strength, Charpy impact strength) of the resin composition.

A twin-screw extruder usable for the production of the resin composition of the present embodiment includes, for example, a drive unit for driving screws, and a die for extruding the resin composition. The twin-screw extruder includes, in order from the upstream side, a first feed port and a second feed port (side feeder), and optionally, a vent port between the first and second feed ports on the downstream side of the second feed port.

The extrusion process using the twin-screw extruder involves feeding the materials described above from the first and second feed ports and driving the screws through the drive unit to melt-knead the materials and extrude the materials from the die to provide a resin composition.

More specifically, although the components (A), (B) and (C) can be fed from any position of the twin-screw extruder, the following configuration is preferred. The component (A) is fed to the twin-screw extruder from the top first feed port, and in some cases a portion of the component (A) is fed from the second feed port located midway of the extruder. The components (B) and (C) are fed to the twin-screw extruder from the top first feed port and/or the second feed port located midway of the front zone, and from a third feed port optionally provided. This configuration further prevents thermal decomposition of the component (B) in synergy with the extrusion conditions for the method of producing molded articles for piping.

Also suitable is a counter-rotating or co-rotating twin-screw extruder. Further, auxiliary raw materials such as other resins and additives can be fed for example from the second feed port (side feeder), although it requires feeder equipment as accessory equipment.

-Method of Manufacturing Housing Case-

The housing case 13 in the present embodiment is obtained by molding the resin composition described above. The strength of the housing case 13 may be further improved by adding glass fiber to the resin composition. On the other hand, glass fiber may not be added when the surface smoothness is considered important from the perspective of improving appearance or preventing tearing of separation membranes.

As the molding method, any common molding method can be used such as, for example, extrusion molding, injection molding, blow molding or gas injection molding. Of them, preferred for the manufacture of the tubular part 16, a tube member, is extrusion molding whereby an elongated molded article can be obtained. Preferred for the manufacture of the cap member 15 and the membrane fixing part 17, a header member, is injection molding whereby a molded product having a complicated shape can be obtained. The target molding temperature is in the range of 160°C to 360°C, preferably in the range of 180°C to 360°C, and more preferably in the range of 240°C to 320°C.

The housing case 13 in the present embodiment easily meets various beverage standards as the resin composition which constitutes at least part of the housing case 13 is butadiene-free, as well as has excellent impact resistance and good heat resistance. Further, the housing case 13 can be easily manufactured by extrusion molding and has excellent appearance. Thus, the housing case 13 of the present embodiment can be suitably used in tap water treatment and food applications.

EXAMPLES

Hereinafter, the present disclosure will be described based on Examples, which however shall not be construed as limiting the scope of the present disclosure in any way. The components used in Examples and Comparative Examples are as described below.

-(A) Polyphenylene Ether (PPE)-

(PPE-1): Poly-2,6-dimethyl-1,4-phenylene ether (trade name "Zylon S201A" from Asahi Kasei Chemicals Corporation) with a weight average molecular weight of 46,000
(PPE-2): Poly-2,6-dimethyl-1,4-phenylene ether (trade name "Zylon S203A" from Asahi Kasei Chemicals Corporation) with a weight average molecular weight of 36,000

-(B) Polystyrene Homopolymer-

(GPPS): Homopolystyrene (trade name "PSJ-Polystyrene 685" from PS Japan Corporation)

-(B') Polystyrene-

(HIPS): Rubber-reinforced polystyrene (trade name "CT60" from Petrochemical Corporation)

-(C) Hydrogenated Block Copolymer-

(SEBS-1): Hydrogenated styrene-ethylene-butylene-styrene copolymer (32% by mass styrene polymer block content, 200,000 weight average molecular weight, 99% degree of hydrogenation)
(SEBS-2): Hydrogenated styrene-ethylene-butylene-styrene copolymer (32% by mass styrene polymer block content, 200,000 weight average molecular weight, 96% degree of hydrogenation)
SEBS-1 was obtained by the method described above for producing a hydrogenated block copolymer. Specifically, a block copolymer having a styrene block content of 32% by mass and a weight average molecular weight of 200,000 was synthesized by anion block copolymerization of styrene and butadiene in cyclohexane solution using n-butyllithium as a polymerization catalyst and tetrahydrofuran as a vinyl content regulator. Subsequently, hydrogenation was carried out for 2 hours at 50°C under a hydrogen pressure of 5 kg/cm$^2$ using bis(cyclopentadienyl)titanium dichloride and n-butyllithium as hydrogenation catalysts.
SEBS-2 was produced in the same manner as SEBS-1 except that the condition for hydrogenation of SEBS-1 was changed to 1 hour at 50°C.

-(D) Phosphorus Antioxidant-

(STB): Phosphorus antioxidant (trade name "Irgafos 168" from BASF Corporation)

[Characterization Method etc.]

The obtained resin composition was characterized using the methods and conditions described below.

(Preparation of Dumbbell and Strip Test Pieces)

The resin composition pellet obtained was dried for 2 hours at 100°C. Test pieces were prepared from the dried resin composition pellet in accordance with ISO-15103 using the IS-100GN model injection molding machine from

Toshiba Machine Co., Ltd (cylinder temperature: 280°C, mold temperature: 80°C).

(1) Melt Flow Rate (MFR)
In accordance with JIS K7210, MFR was measured using the resin composition pellet at a test temperature of 250°C and a test load of 10 kg.
(2) Charpy Impact Strength
The test pieces were notched and measured for Charpy impact strength in accordance with ISO-179.
(3) Flexural Modulus
The test pieces were measured for flexural modulus at a test speed of 2 mm/min in accordance with ISO-178.
(4) Deflection Temperature under Load (DTUL)
The test pieces were measured for deflection temperature under load of 1.8 MPa in accordance with ISO-75-1.
(5) Mold Deposit
In the process of preparing the test pieces, cloudiness at the flow end of the mold after 100 shots of test piece was evaluated.

A: No cloudiness observed by visual inspection
B: Slight cloudiness observed by visual inspection
C: Obvious cloudiness observed by visual inspection

(6) Discoloration during Retention
The resin composition pellets obtained in Examples and Comparative Examples were subjected to injection molding using the molding machine EC100SX (Toshiba Machine Co., Ltd) and a flat plate mold with dimensions of 150 mm width, 150 mm length and 2 mm thickness.
During injection molding, the cylinder temperature was set to 340°C and the mold temperature to 90°C. Three shots were injected with an injection time of 15 seconds, an injection speed of 50 mm/min and a cooling time of 15 seconds and allowed to stand for 10 minutes. Thereafter, 5 shots were injected under the same conditions as those used for the 3 shots. The color difference $\Delta E^*$ of the 5 shots after 10-minute retention as compared to $E^*$ of the obtained 3 shots of plate molded articles was measured.

$$A: \Delta E^* < 2$$

$$B: \Delta E^* < 3$$

$$C: \Delta E^* \geq 3$$

Test pieces with $\Delta E^*$ of less than 3 (rank A or B) were deemed acceptable.
(7) Inner Appearance of Molded Article for Piping
Tubular molded articles obtained by the method described in Example described later were cut into 1 m length test pieces and their inner appearance was visually checked for wavy uneven thickness.

A: No wavy periodic uneven thickness observed within the length of 1 m
B: Wavy structure of <5 cm length observed at no more than one place within the length of 1 m
C: Wavy periodic uneven thickness partially or entirely observed within the length of 1 m

Test pieces ranked A or B were deemed acceptable.
(8) Hot Internal Pressure Creep of Molded Article for Piping
In accordance with JIS K6776, test pieces of 700mm length were cut from the tubular molded articles, conditioned at 90±2°C for 1 hour, loaded with a pressure of 1.5 MPa with warm water at 90°C for 1 hour, and visually checked for the occurrence of deformation.

A: No deformation observed by visual inspection
B: Slight deformation observed partially by visual inspection
C: Obvious deformation observed partially or entirely by visual inspection

Test pieces ranked A or B were deemed acceptable.

[Analysis of Butadiene in Resin Composition]

The butadiene concentration in the resin composition was measured by gas chromatography by the procedure described below.

The butadiene concentration was determined by gas chromatography using a head space gas chromatograph equipped with CHROMPACK capillary column CP-PoraPLOT Q-HT having a length of 27.5 m, an inner diameter of 0.32 mm and a membrane thickness of 10 μm with an injection amount of 25 μl. To prepare a stock solution of 1,3-butadiene, a septum for a 25 ml vial was punctured twice with a hollow needle, leaving the hollow needle in one of the perforations. A vial with the septum and a screw cap was weighed. 20 ml of N,N-dimethylacetamide was pipetted into the vial and the vial was weighed again. The vial with the hollow needle and second perforation was closed with the screw cap. Working in the fume hood, approximately 0.3 g of 1,3-butadiene was introduced into the vial from the second perforation via a thin tube. The vial with the screw cap and hollow needle was weighed again. The concentration of 1,3-butadiene in the vial was calculated in milligrams per 1 g of solution. To prepare standard solutions of 1,3-butadiene, 4 sample vials with a septum and a cap were weighed. 20 ml of N,N-dimethylacetamide was pipetted into each vial. 0.1 ml, 0.5 ml, 1.0 ml and 2.0 ml of 1,3-butadiene stock solution were pipetted into the 4 vials, respectively. The vials were weighed again. The concentration of 1,3-butadiene in each vial was calculated in milligrams per 1 g of solution. 20 ml of N,N-dimethylacetamide was pipetted into a 25 ml vial, the vial was capped, and 40 μl of n-pentane was added to the vial via a syringe to prepare an internal standard solution. Analytical sample was prepared by the procedure described below. An empty 25 ml sample vial was purged with purified nitrogen. A headspace vial with a septum and a cap was weighed. Approximately 1.00 g of a precisely weighed solid sample was introduced into the vial. 5 ml of N,N-dimethylacetamide was pipetted into the vial and the vial was capped. 20 μl of the internal standard solution was added to the vial from the septum via a syringe. This procedure was repeated to prepare a total of 4 vial samples. 20 μl of 1,3-butadiene standard solutions A, B, C and D were introduced into the 4 vials. These vials were placed in a shaker and shaken overnight. 1 μl volume of the head space of each sample was analyzed by gas chromatography and peak areas of n-pentane internal standard and 1,3-butadiene were recorded. For each sample, the concentration of 1,3-butadiene was determined as the ratio of peak area of 1,3-butadiene to that of n-pentane. The ratio of the peak area was plotted against the concentration of 1,3-butadiene and fitted to the equation $y = ax + b$ (y: peak area ratio of 1,3-butadiene to n-pentane, a: slope of regression line (kg/mg), x: concentration of 1,3-butadiene (mg/kg) in solid, b: intercept of regression line). The concentration of butadiene in the solid is determined as b/a (a: slope of regression line (kg/mg), b: intercept of regression line). The result is the concentration of 1,3-butadiene in the solid expressed in milligrams per kg of polymer (i.e., ppm by mass of 1,3-butadiene).

[Example 1]

A resin composition formulated with the components shown in Table 1 was prepared using the production conditions described below. The materials shown in Table 1 were fed to the twin-screw extruder TEM 58SS (Toshiba Machine Co., Ltd.) having a screw diameter of 58 mm, 13 barrels and a pressure reducing vent opening under the conditions shown in Table 1 and melt-kneaded. The screw setup of the extruder comprises a front stage (non-molten to semi-molten mixing zone) accounting for about 70% of the total barrel length and a rear stage (melt-kneading zone) accounting for the remaining barrel length of 30%. Melt-kneading and extrusion were carried out to produce a resin composition pellet under the conditions described below. Specifically, the temperature used in the barrels and dice were water cooling (barrel 1), 150°C (barrel 2), 200°C (barrels 3 to 8), 250°C (barrel 9), 280°C (barrels 10 to 13), and 290°C (dice). Screw rotation number was set to 400 rpm and discharge amount was set to 40 kg/h. In this configuration, barrels 1 to 9 constituted the front stage zone of the barrel sequence and barrels 10 to 13 constituted the rear stage zone of the barrel sequence. Barrel 11 was provided with a vacuum vent port 11 for vacuum degassing at about 100 hPa. Nitrogen was fed from the lower part of the first feed port at a rate of about 30L/min so that the upper part of the first feed port has an oxygen concentration of about 2.0%.

Next, using a 120mm-diameter single-screw extruder, the resin composition pellet obtained was discharged from a tubular die at a cylinder temperature of 320°C to produce a tubular molded article. Specifically, a tubular die was used that results in a tubular molded article having a thickness of 6 mm and a tube outer diameter of 200 mm as shown in Table 1. The discharge amount during extrusion was set such that the discharge rate in tube length direction is 10 mm/min. The discharged resin was cooled using a cooling mold whose temperature at the outer surface of the tube is set to 60°C while blowing 20°C to 40°C cooling nitrogen gas inside the tube.

The resin composition pellet and molded article obtained were evaluated by the characterization methods described above. The results are shown in Table 1.

[Examples 2 to 9 and Comparative Examples 1 to 5]

Resin composition pellets were prepared in the same manner as in Example 1 except that the formulation and production conditions were changed as shown in Tables 1 and 2. The obtained resin composition pellets were evaluated in the same manner and the results shown in Tables 1 and 2 were obtained.

Table 1

| | | Example 1 | Comparative Example 1 | Comparative Example 2 | Example 2 | Example 3 | Comparative Example 3 | Example 4 |
|---|---|---|---|---|---|---|---|---|
| (Formulation) Parts by mass *1 | | | | | | | | |
| Component (A) | | | | | | | | |
| | PPE-1 Mw=46,000 | 20 | 17 | 19 | 40 | 8 | 55 | |
| | PPE-2 Mw=36,000 | | | | | | | 20 |
| Component (B) | | | | | | | | |
| | GPPS | 72 | 70 | 71 | 48 | 84 | 31 | 72 |
| Component (B') | | | | | | | | |
| | HIPS | | 5 | 2 | | | | |
| Component (C) | | | | | | | | |
| | SEBS-1 | 8 | 8 | 8 | 12 | 8 | 14 | 8 |
| | SEBS-2 | | | | | | | |
| Component (D) | | | | | | | | |
| | STB | 0.2 | 0.2 | 0.2 | 0.2 | 0.2 | 0.2 | 0.2 |
| | | | | | | | | |
| Total | | 100.2 | 100.2 | 100.2 | 100.2 | 100.2 | 100.2 | 100.2 |
| (Analytical value) | | | | | | | | |
| Butadiene concentration (mg/kg) | | <0.05 | 1.2 | 0.5 | <0.05 | <0.05 | <0.05 | <0.05 |
| | | | | | | | | |
| (Shape of molded article) | | | | | | | | |
| Tubular molded article thickness t (mm) | | 6 | 6 | 6 | 6 | 6 | 6 | 6 |
| Tubular molded article outer diameter D (mm) | | 200 | 200 | 200 | 200 | 200 | 200 | 200 |
| | | | | | | | | |
| (Physical properties) | | | | | | | | |
| MFR 250°C/98N | | 26 | 28 | 27 | 7 | 32 | 4 | 38 |
| Charpy impact strength (kJ/$m^3$) | | 10 | 11 | 11 | 23 | 11 | 18 | 6 |

(continued)

| | Example 1 | Comparative Example 1 | Comparative Example 2 | Example 2 | Example 3 | Comparative Example 3 | Example 4 |
|---|---|---|---|---|---|---|---|
| Flexural modulus (MPa) | 2600 | 2600 | 2600 | 2400 | | 2400 | 2700 |
| DTUL 1.81MPa (°C) | 93 | 91 | 92 | 114 | 2700 83 | 128 | 92 |
| Mold deposit | A | A | A | A | A | A | A |
| Discoloration during retention | A | A | A | A | A | A | B |
| Inner appearance of tubular molded article | A | C | C | A | A | C | B |
| Hot internal pressure creep of tubular molded article | A | A | A | A | B | A | A |
| *1: Content per 100 parts by mass of the total amount of components (A) to (C) (where component (B') is also used, the component (B') content is also added to total amount) | | | | | | | |

Table 2

| | | Comparativ e | Comparativ e | Example 5 | Example 6 | Example 7 | Example 8 | Example 9 |
|---|---|---|---|---|---|---|---|---|
| (Formulation) Parts by mass *1 | | | | | | | | |
| Component (A) | | | | | | | | |
| | PPE-1 Mw=46,000 | 23 | 15 | 16 | 20 | 20 | 20 | 20 |
| | PPE-2 Mw-36,000 | | | | | | | |
| Component (B) | | | | | | | | |
| | GPPS | 75 | 50 | 59 | 72 | 72 | 72 | 72 |
| Component (B') | | | | | | | | |
| | HIPS | | | | | | | |
| Component (C) | | | | | | | | |
| | SEBS-1 | 2 | 35 | 25 | 8 | 8 | 8 | |
| | SEBS-2 | | | | | | | 8 |
| Component (D) | | | | | | | | |
| | STB | 0.2 | 0.2 | 0.2 | 0.1 | 1.5 | 0.2 | 0.2 |
| | | | | | | | | |
| Total | | 100.2 | 100.2 | 100.2 | 100 | 101.5 | 100.2 | 1002 |
| (Analytical value) | | | | | | | | |
| Butadiene concentration (mg/kg) | | <0.05 | <0.05 | <0.05 | <0.05 | <0.05 | <0.05 | 0.09 |
| | | | | | | | | |
| (Shape of molded article) | | | | | | | | |
| Tubular molded article thickness t (mm) | | 6 | 6 | 6 | 6 | 6 | 2 | 6 |
| Tubular molded article outer diameter D (mm) | | 200 | 200 | 200 | 200 | 200 | 200 | 200 |
| | | | | | | | | |
| (Physical properties) | | | | | | | | |
| MFR 250°C/98N | | 30 | 18 | 22 | 28 | 20 | 26 | 26 |
| Charpy impact strength ($kJ/m^3$) | | 2 | 26 | 18 | 11 | 7 | 10 | 10 |

(continued)

| | Comparativ e | Comparativ e | Example 5 | Example 6 | Example 7 | Example 8 | Example 9 |
|---|---|---|---|---|---|---|---|
| Flexural modulus (MPa) | 2700 | 2000 | 2400 | 2600 | 2500 | 2600 | 2600 |
| DTUL 1.81MPa (°C) | 94 | 86 | 90 | 91 | 89 | 93 | 93 |
| Mold deposit | A | A | A | A | B | A | A |
| Discoloration during retention | A | A | A | B | A | A | A |
| Inner appearance of tubular molded article | A | A | A | A | A | A | A |
| Hot internal pressure creep of tubular molded article | A | C | A | A | A | B | A |

*1: Content per 100 parts by mass of the total amount of components (A) to (C) (where component (B') is also used, the component (B') content is also added to total amount)

As shown in Tables 1 and 2, it was confirmed that the resin compositions of Examples 1 to 9 had a butadiene concentration of less than 0.1 mg/kg, high impact resistance and heat resistance, as well as excellent appearance and hot internal pressure creep when formed into a molded article for piping.

INDUSTRIAL APPLICABILITY

In the separation membrane module of the present disclosure, the housing case exhibits low elution of butadiene as the resin composition of the housing case has a butadiene concentration of less than 0.1 mg/kg as well as has excellent appearance, impact resistance and heat resistance. Further, the separation membrane module of the present disclosure can be suitably used in tap water treatment, food, and other applications.

## Claims

1. A separation membrane module (10) comprising:

   a porous membrane (11);
   a housing case (13) for housing the porous membrane (11); and
   a sealing material (12) for fixing at least a part of the porous membrane (11) to the housing case (13),
   wherein at least a part of the housing case (13) is made of a resin composition that comprises (A) a polyphenylene ether, (B) a polystyrene homopolymer, and (C) a hydrogenated block copolymer having a weight average molecular weight in the range of 100,000 to 400,000, the hydrogenated block copolymer obtained by hydrogenating a block copolymer of a styrene polymer block and a conjugated diene compound polymer block,
   the resin composition comprises
   5 to 50 parts by mass of the component (A),
   20 to 90 parts by mass of the component (B), and
   3 to 30 parts by mass of the component (C) per 100 parts by mass of the total amount of the components (A), (B) and (C), and
   the resin composition comprise butadiene in a concentration of less than 0.1 mg/kg.

2. The separation membrane module (10) according to claim 1, wherein the resin composition further comprises (D) a phosphorus antioxidant in an amount of 0.05 to 1 part by mass per 100 parts by mass of the total amount of the components (A), (B) and (C).

3. The separation membrane module (10) according to claim 1 or 2, wherein the component (A) has a weight average molecular weight in the range of 40,000 to 100,000.

4. The separation membrane module (10) according to any one of claims 1 to 3, wherein the component (C) has a degree of hydrogenation of 95% or more.

5. The separation membrane module (10) according to any one of claims 1 to 4, wherein the housing case (13) comprises at least a cylindrical tubular part (16), and at least a part of the tubular part (16) is made of the resin composition.

6. The separation membrane module (10) according to claim 5, wherein the tubular part (16) is a tube member.

7. The separation membrane module (10) according to claim 5 or 6, wherein the tubular part (16) has an outer diameter D (mm) of 40 mm or more and a wall thickness t (mm) that satisfies the condition $(1/40) \times D < t < (1/10) \times D$.

8. The separation membrane module (10) according to any one of claims 5 to 7, wherein a value obtained by dividing an inner wall area of the tubular part (16) by an inner volume of the tubular part (16) is 0.12 $m^{-1}$ or less.

9. The separation membrane module (10) according to any one of claims 1 to 4, wherein the housing case (13) comprises at least a header member having a nozzle part (18), and at least a part of the header member is made of the resin composition.

10. The separation membrane module (10) according to any one of claims 1 to 4, wherein the housing case (13) comprises at least a cap member (15), and at least a part of the cap member (15) is made of the resin composition.

**11.** The separation membrane module (10) according to any one of claims 1 to 10, wherein the housing case (13) comprises at least a screw thread (22), (23), and the screw thread (22), (23) has a pitch of 1 mm or more.

**12.** The separation membrane module (10) according to any one of claims 1 to 11, wherein the porous membrane (11) has a hollow fiber shape.

**13.** The separation membrane module (10) according to any one of claims 1 to 12, wherein the separation membrane module (10) is used in a tap water treatment or food application.

FIG. 1

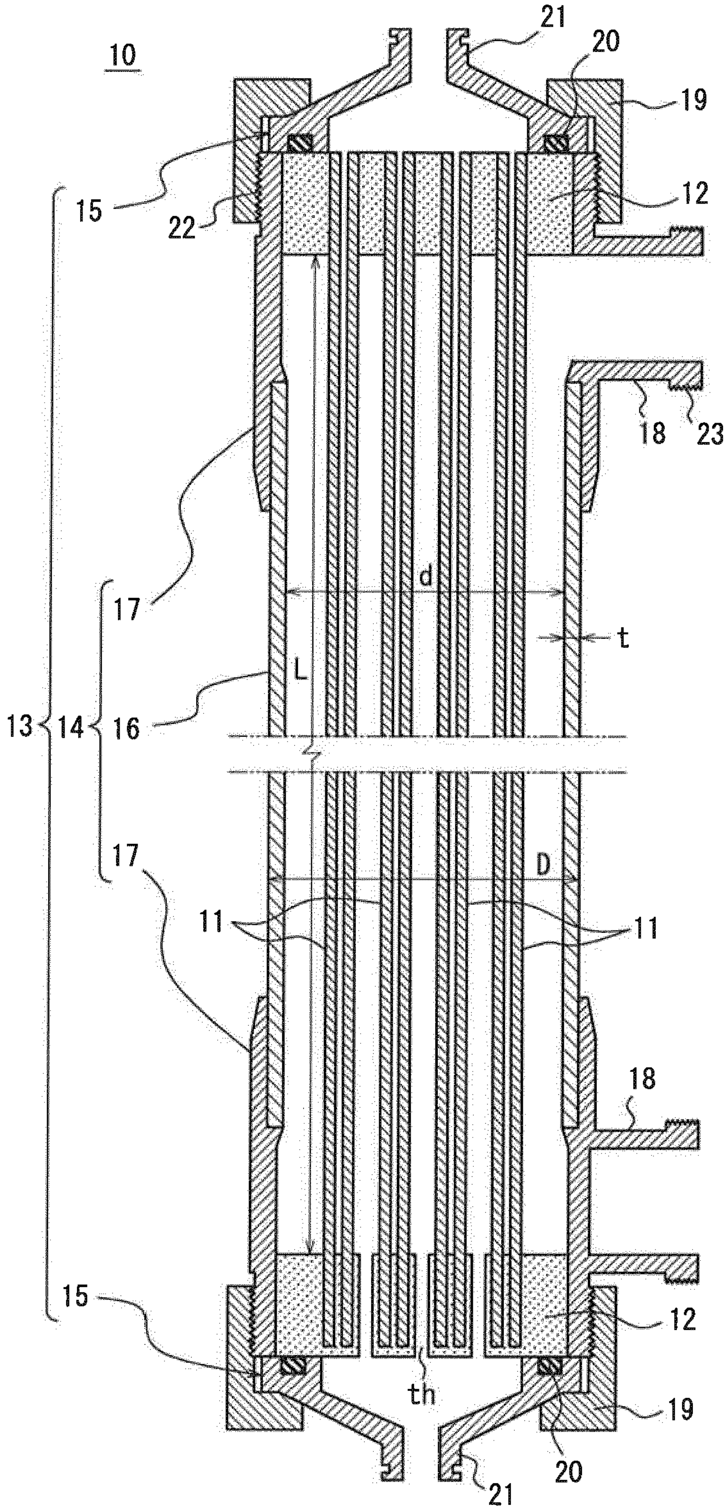
10
21
20
19
15
22
12
18
23
17
d
t
L
13
14
16
17
D
11
11
18
15
12
th
19
21
20

FIG. 2

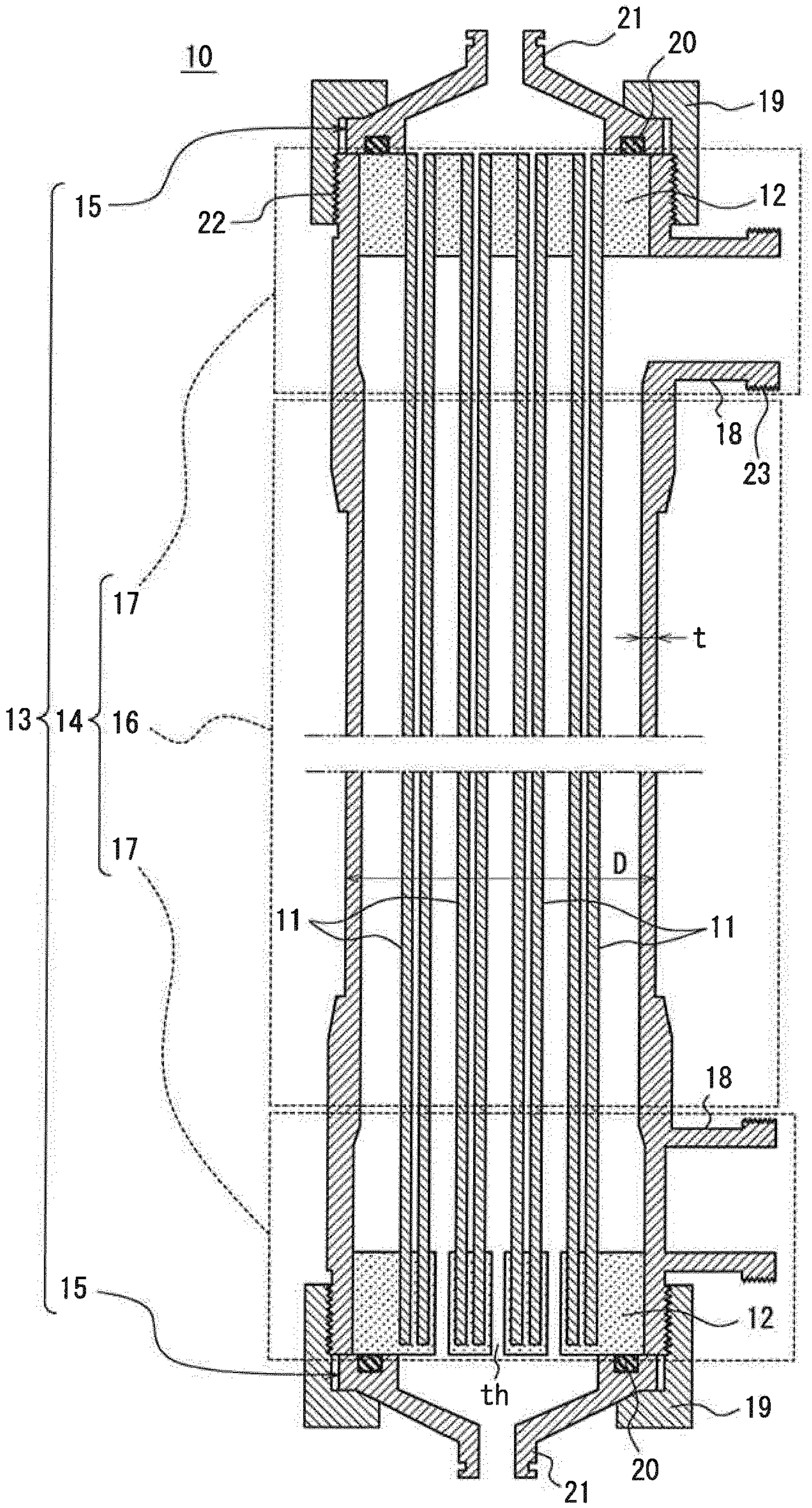

FIG. 3

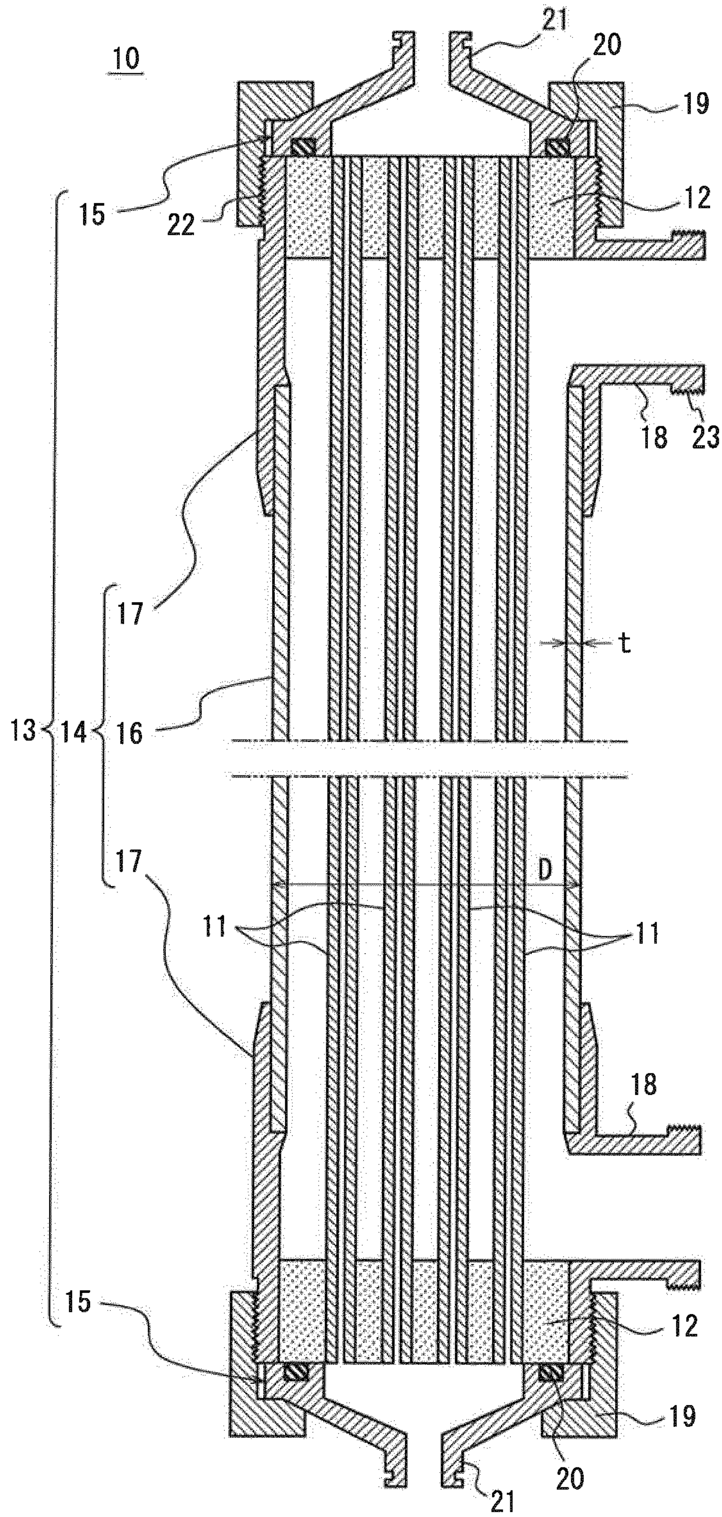

Europäisches Patentamt
European Patent Office
Office européen des brevets

# EUROPEAN SEARCH REPORT

Application Number
EP 18 16 6473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H09 187629 A (DAINIPPON INK & CHEMICALS) 22 July 1997 (1997-07-22)<br>* paragraph [0024] *<br>----- | 1-13 | INV.<br>B01D63/02 |
| X | JP H11 169457 A (NISSHO KK)<br>29 June 1999 (1999-06-29)<br>* paragraph [0002] *<br>----- | 1-13 | |
| X | JP 2005 230222 A (ASAHI KASEI MEDICAL CO LTD) 2 September 2005 (2005-09-02)<br>* paragraph [0004] *<br>----- | 1-13 | |
| X,P | Axeon: "Engineered Membrane Solutions PVC Membrane Housings",<br>,<br>17 August 2018 (2018-08-17), XP055500559,<br>Retrieved from the Internet:<br>URL:https://www.lenntech.com/Data-sheets/Axeon-Membrane-Housings-L.pdf<br>[retrieved on 2018-08-17]<br>* the whole document *<br>----- | 1-13 | TECHNICAL FIELDS SEARCHED (IPC) |
| A | WO 03/004573 A1 (GEN ELECTRIC [US]; AMAYA YOSHINORI [JP]; SATO TAKUMI [JP])<br>16 January 2003 (2003-01-16)<br>* pages 1,27; table 1 *<br>----- | 1-13 | B01D |

The present search report has been drawn up for all claims

1

| Place of search | Date of completion of the search | Examiner |
|---|---|---|
| Munich | 17 August 2018 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 16 6473

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2018

| Patent document cited in search report | Publication date | Patent family member(s) | Publication date |
|---|---|---|---|
| JP H09187629 A | 22-07-1997 | NONE | |
| JP H11169457 A | 29-06-1999 | NONE | |
| JP 2005230222 A | 02-09-2005 | JP 4190441 B2 | 03-12-2008 |
| | | JP 2005230222 A | 02-09-2005 |
| WO 03004573 A1 | 16-01-2003 | CN 1543490 A | 03-11-2004 |
| | | EP 1414918 A1 | 06-05-2004 |
| | | WO 03004573 A1 | 16-01-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003074754 A
- JP 2008291183 A
- JP 2015500901 A

### Non-patent literature cited in the description


- **I. M. KOLTHOFF et al.** *J. Polym. Sci.,* 1946, vol. 1, 429